# FASCICULE DE BREVET EUROPEEN

(11) **EP 3 633 530 B1**
(45) Date de publication et mention de la délivrance du brevet: **01.11.2023**
(21) Numéro de dépôt: 19200037.0
(22) Date de dépôt: 27.09.2019
(51) Int. Cl.: H04L 9/40, G06F 21/36, H04L 9/32, H04W 12/06

(54) **METHODE D'AUTHENTIFICATION D'UN UTILISATEUR PAR IDENTIFIANT D'UTILISATEUR ET PAR MOT DE PASSE GRAPHIQUE ASSOCIÈ**
BENUTZERAUTHENTIFIZIERUNGSVERFAHREN MITTELS BENUTZERKENNUNG UND ZUGEHÖRIGEN GRAFISCHEN PASSWORTS
USER AUTHENTICATION METHOD WITH A USER IDENTIFIER AND AN ASSOCIATED GRAPHICAL PASSWORD

(30) Priorité: 02.10.2018 FR 1859146
(43) Date de publication de la demande: 08.04.2020
(73) Titulaire: BULL SAS, 78340 Les Clayes-sous-Bois (FR)
(72) Inventeur: GUIONNEAU, Christophe, 38000 GRENOBLE (FR); CLEMENT, Valérie, 38240 MEYLAN (FR)
(74) Mandataire: Plasseraud IP

(56) Documents cités:
- WO-A1-2012/146587
- US-A1- 2004 230 843
- US-A1- 2013 340 057
- US-A1- 2016 306 994
- Malih Raghda Ahmed: "User Authentication System Using Emoji pictures passwords", , 31 May 2015 (2015-05-31), XP055872535, Retrieved from the Internet: URL:https://meu.edu.jo/libraryTheses/5874c 5b2cadaa_1.pdf [retrieved on 2021-12-14]

## Description

### DOMAINE DE L'INVENTION

L'invention concerne le domaine des méthodes d'authentification d'un utilisateur par identifiant d'utilisateur et par mot de passe graphique associé, ainsi que le domaine des méthodes de création d'un mot de passe graphique associé à un identifiant d'utilisateur.

### CONTEXTE DE L'INVENTION

Les applications ou les portails d'applications web requièrent des mécanismes d'authentification à la fois robustes mais également simples à utiliser pour les différentes populations d'utilisateurs, c'est-à-dire ergonomiques, que ce soit les employés des entreprises ou leurs clients. Les mécanismes d'authentification choisis vont être suffisamment robustes pour certifier que l'utilisateur authentifié n'est pas une identité usurpée. La principale méthode d'authentification est l'authentification par mot de passe, cette méthode est simple à mettre en oeuvre mais n'est hélas pas très robuste.

Selon un premier art antérieur, il est connu une méthode d'authentification d'un utilisateur auprès d'une application par un mot de passe alphanumérique associé à un identifiant d'utilisateur. Ce premier type de mot de passe présente trois inconvénients par rapport à la sécurité. Un premier inconvénient est que ce premier type de mot de passe alphanumérique est facile à pirater par une attaque de type dictionnaire (utilisation d'un dictionnaire de mots de passes) et/ou de type force brute (réalisation de toutes les combinaisons possibles ou plausibles). Un deuxième inconvénient est que ce premier type de mot de passe alphanumérique est facile à pirater par une attaque de type intrusion entre l'utilisateur et l'application pour surveiller leurs échanges et en extraire le mot de passe.

Selon un deuxième art antérieur, il est connu une méthode d'authentification d'un utilisateur auprès d'une application par un mot de passe de type code PIN (PIN pour « Personal Identification Number » en langue anglaise) associé à un identifiant d'utilisateur. Ce deuxième type de mot de passe est un peu plus robuste que le premier mais présente deux inconvénients par rapport à la sécurité. Un premier inconvénient est que ce deuxième type de mot de passe de type code PIN peut être piraté par une attaque de type application malveillante détectant le mouvement des yeux de l'utilisateur lorsqu'il tape son code PIN, le nombre de combinaisons probables restantes étant alors très réduit et pouvant ensuite facilement être essayé dans son intégralité. Un deuxième inconvénient est que ce deuxième type de mot de passe de type code PIN est facile à pirater par une attaque de type intrusion entre l'utilisateur et l'application pour surveiller leurs échanges et en extraire le mot de passe.

Il pourrait également être envisagé une méthode d'authentification d'un utilisateur auprès d'une application par un mot de passe graphique associé à un identifiant d'utilisateur. Ce troisième type de mot de passe graphique serait alors composé d'une séquence d'images et serait un peu plus robuste également que le premier mais présenterait tout de même deux inconvénients par rapport à la sécurité. Un premier inconvénient serait que ce troisième type de mot de passe graphique pourrait être piraté par une attaque de type application malveillante détectant le mouvement des yeux de l'utilisateur lorsqu'il taperait son mot de passe graphique, le nombre de combinaisons probables restantes étant alors très réduit et pouvant ensuite facilement être essayé dans son intégralité. Un deuxième inconvénient serait que ce troisième type de mot de passe graphique serait facile à pirater par une attaque de type intrusion entre l'utilisateur et l'application pour surveiller leurs échanges et en extraire le mot de passe.

L'ensemble des techniques d'authentification d'un utilisateur auprès d'une application par un mot de passe associé à un identifiant d'utilisateur, existantes ou pouvant être imaginées à partir de celles qui sont existantes, présente au moins deux inconvénients par rapport à la sécurité qui sont :
> un premier inconvénient, celui de pouvoir être relativement aisément piraté par une attaque de type application malveillante détectant le mouvement des yeux de l'utilisateur lorsqu'il tape son mot de passe graphique,
> un deuxième inconvénient, celui de pouvoir être relativement aisément piraté par une attaque de type intrusion entre l'utilisateur et l'application pour surveiller leurs échanges et en extraire le mot de passe.

Selon un quatrième art antérieur, qui n'est cité ici que pour information, des mécanismes d'authentification de type multi-facteurs sont utilisés. Ces mécanismes sont basés soit sur la possession d'un objet, comme par exemple une clé USB contenant un secret ou un mécanisme de chiffrement particulier, ou comme un téléphone portable auquel est envoyée une notification contenant là encore un élément secret supplémentaire comme un code secret additionnel, ou encore comme l'utilisation d'envoi de messagerie envoyant des courriels à partir d'un ordinateur.

Ce quatrième art antérieur est plus complexe, moins pratique, et pas toujours plus sécurisé que les trois autres arts antérieurs ou prolongements d'art antérieur. En effet, ils requièrent un objet supplémentaire et/ou une étape supplémentaire et/ou code secret supplémentaire et/ou dépendent de tiers non contrôlés par les applications comme les infrastructures de télécommunication par exemple.

Ce quatrième art antérieur peut être utilisé en plus de l'invention, mais pas à la place de l'invention, laquelle invention va s'attacher à proposer une méthode d'authentification de simplicité similaire ou comparable aux méthodes revenant plus ou moins à la simple utilisation d'un mot de passe, mais avec une sécurité nettement plus élevée.

### RESUME DE L'INVENTION

Le but de la présente invention est de fournir une méthode d'authentification d'un utilisateur par identifiant d'utilisateur et par mot de passe graphique associé palliant au moins partiellement les inconvénients précités.

Plus particulièrement, selon l'invention, ces faiblesses de sécurité proviennent du fait que, que ce soit pour l'un ou l'autre des types d'attaque, par détection visuelle ou par détection tactile, il est possible à une application malveillante de détecter où l'utilisateur tape, et donc de remonter au caractère ou à l'image tapée, puisque la place du caractère ou de l'image sur le clavier virtuel est toujours la même.

Plus particulièrement, selon l'invention, le fait de changer aléatoirement et souvent, voire tout le temps, la place des caractères ou des images sur le clavier virtuel, présente l'intérêt de conserver très élevé le nombre de combinaisons possibles, même si l'application malveillante est capable, à chaque authentification, de détecter visuellement ou tactilement où l'utilisateur tape, à quel endroit du clavier virtuel l'utilisateur tape. En revanche si la position du caractère ou de l'image change aléatoirement à chaque fois, la détection de cette position va devenir insuffisante, pour l'application malveillante, pour réduire notablement le nombre de caractères ou d'images possibles pour trouver le mot de passe. Par contre, bien sûr, il est beaucoup plus difficile, voire impossible à ce jour, pour une application malveillante, de détecter visuellement non pas les mouvements de l'utilisateur mais la représentation graphique sur le clavier virtuel des caractères ou des images à taper. D'où l'augmentation très importante du niveau de sécurité par l'utilisation d'un changement aléatoire des caractères ou des images à sélectionner pour constituer le mot de passe.

De plus, pour garantir un niveau de sécurité encore plus élevé, en plus de la position changeante des caractères ou des images à sélectionner pour constituer le mot de passe, il est particulièrement intéressant de disposer d'un grand nombre de ces caractères ou des images à sélectionner pour constituer le mot de passe. Et là, l'invention a mis en évidence un nouveau problème, celui de l'ergonomie, celui de la facilité d'utilisation pour l'utilisateur. En effet, si, pour avoir un grand nombre de caractères à sélectionner pour constituer le mot de passe, il faut faire appel à des caractères originaux (alphabet grec par exemple) ou à des combinaisons de caractères (doublet de lettres, triplet de lettres), l'ergonomie va s'effondrer, et la difficulté croissante d'utilisation va entraîner, en plus de la lassitude de l'utilisateur qui va rechigner à utiliser un tel mot de passe et de l'inefficacité du système à cause de nombreuses erreurs et oublis, une chute de sécurité, les utilisateurs tendant alors à prendre les mots de passe les plus simples (par exemple cinq fois le même caractère). C'est pourquoi, l'invention préconise l'utilisation d'images lesquelles même en grand nombre sont facilement reconnaissables et mémorisables, même en séquence de plusieurs d'entre elles, par l'utilisateur. Les images ont seulement besoin d'être suffisamment distinctes entre elles et suffisamment « parlantes » par elles-mêmes, c'est-à-dire évoquer des choses qui sont bien distinctes entre elles et que l'utilisateur est susceptible de mémoriser plus facilement.

Au final, l'invention propose un meilleur compromis entre d'une part sécurité de l'application utilisée et d'autre part ergonomie ou facilité d'utilisation pour l'utilisateur, étant entendu qu'une trop grande difficulté d'utilisation amène souvent de la part des utilisateurs des techniques de contournement aboutissant à créer de nouvelles failles de sécurité.

L'invention propose l'amélioration de ce compromis entre sécurité et ergonomie, la sécurité dépendant aussi partiellement et indirectement de l'ergonomie, par l'utilisation d'images plus facilement mémorisables en grand nombre, avec conservation d'un nombre élevé de combinaisons possibles d'images pour reconstituer le mot de passe grâce au changement aléatoire permanent de la position des images affichées, par exemple dans un clavier virtuel sur l'interface de visualisation d'un appareil électronique portatif comme un téléphone portable, même lorsqu'une application malveillante peut détecter (visuellement ou tactilement) la position des sélections effectuées par l'utilisateur, par exemple sur ce clavier virtuel.

A cette fin, la présente invention propose une méthode d'authentification d'un utilisateur par identifiant d'utilisateur et par mot de passe graphique associé, caractérisée en ce que : le mot de passe graphique comprend une séquence de plusieurs images appartenant à un groupe d'images, l'utilisateur : donne son identifiant d'utilisateur à une application, effectue graphiquement une sélection d'une séquence de plusieurs images dans ce groupe d'images, l'ordre des images dans ce groupe d'images étant affiché par l'application aléatoirement à chaque nouvelle authentification dudit utilisateur, l'application : repère la position de chaque image sélectionnée dans ladite séquence, établit la correspondance entre la séquence desdites positions et la séquence des identifiants des images sélectionnées, compare la séquence des identifiants des images sélectionnées avec la séquence des identifiants des images du mot de passe enregistré pour ledit identifiant d'utilisateur, l'application étant seule à pouvoir établir cette correspondance et/ou l'application étant seule à pouvoir faire cette comparaison, authentifie ledit utilisateur si ladite comparaison est positive mais refuse d'authentifier ledit utilisateur si ladite comparaison est négative.

A cette fin, la présente invention propose également une méthode d'authentification d'un utilisateur par identifiant d'utilisateur et par mot de passe graphique associé, caractérisée en ce que : le mot de passe graphique comprend deux parties : une première partie obtenue par une première sélection d'un groupe d'images parmi plusieurs groupes d'images, une deuxième partie obtenue par une deuxième sélection d'une séquence de plusieurs images dans le groupe d'images sélectionné, l'utilisateur donne son identifiant d'utilisateur à une application, et effectue graphiquement : une première sélection d'un groupe d'images dans un ensemble de plusieurs groupes d'images, l'ordre des groupes d'images dans cet ensemble de groupes d'images étant affiché par l'application aléatoirement à chaque nouvelle authentification dudit utilisateur, une deuxième sélection d'une séquence de plusieurs images dans ce groupe d'images, l'ordre des images dans ce groupe d'images étant affiché par l'application aléatoirement à chaque nouvelle authentification dudit utilisateur, l'application : repère d'une part la position du groupe d'images sélectionné dans ledit ensemble de groupes d'images et d'autre part la position de chaque image sélectionnée dans ladite séquence, établit la correspondance, d'une part entre la position du groupe d'images sélectionné et l'identifiant du groupe d'images sélectionné, et d'autre part entre la séquence des positions des images sélectionnées et la séquence des identifiants des images sélectionnées, compare, d'une part l'identifiant du groupe d'images sélectionnées avec l'identifiant du groupe d'images du mot de passe enregistré pour ledit identifiant d'utilisateur, et d'autre part la séquence des identifiants des images sélectionnées avec la séquence des identifiants des images du mot de passe enregistré pour ledit identifiant d'utilisateur, l'application étant seule à pouvoir établir cette correspondance et/ou l'application étant seule à pouvoir faire cette comparaison, authentifie ledit utilisateur si ladite comparaison est positive mais refuse d'authentifier ledit utilisateur si ladite comparaison est négative.

Le découpage en deux parties du mot de passe graphique amène plusieurs avantages supplémentaires :
> d'abord au niveau sécurité, en augmentant le nombre de combinaisons possibles d'images pour reconstituer le mot de passe, même lorsqu'une application malveillante peut détecter la position des sélections effectuées par l'utilisateur, par exemple sur ce clavier virtuel,
> ensuite au niveau ergonomie, et indirectement à nouveau au niveau sécurité aussi, en rendant le mot de passe en deux parties plus facilement mémorisable par l'utilisateur (on mémorise et on retrouve plus facilement dans un groupe classé en plusieurs sous-groupes petits, que dans un grand groupe où tout est mélangé), sans sacrifier le nombre élevé de combinaisons possibles pour reconstituer le mot de passe.

A cette fin, la présente invention propose encore une méthode de création d'un mot de passe graphique associé à un identifiant d'utilisateur, caractérisée en ce que : le mot de passe graphique comprend : une partie obtenue par une sélection, par l'utilisateur, d'une séquence de plusieurs images dans le groupe d'images sélectionné, l'ordre des images dans ce groupe d'images étant destiné à être affiché par l'application aléatoirement à chaque nouvelle authentification dudit utilisateur.

A cette fin, la présente invention propose enfin une méthode de création d'un mot de passe graphique associé à un identifiant d'utilisateur, caractérisée en ce que : le mot de passe graphique comprend deux parties : une première partie obtenue par une première sélection, par l'utilisateur, d'un groupe d'images parmi plusieurs groupes d'images, l'ordre des groupes d'images dans cet ensemble de groupes d'images étant destiné à être affiché par l'application aléatoirement à chaque nouvelle authentification dudit utilisateur, une deuxième partie obtenue par une deuxième sélection, par l'utilisateur, d'une séquence de plusieurs images dans le groupe d'images sélectionné, l'ordre des images dans ce groupe d'images étant destiné à être affiché par l'application aléatoirement à chaque nouvelle authentification dudit utilisateur.

Selon des modes de réalisation préférés de l'invention, les problèmes techniques des méthodes précédentes sont liés à la difficulté de construire un principe d'authentification, indépendant de toute infrastructure, simple à utiliser et à mettre en oeuvre, et sans coût pour les utilisateurs.

Selon des modes de réalisation préférés de l'invention, il s'agit de :
> proposer une méthode plus forte que la méthode d'authentification par mot de passe simple, par exemple de type alphanumérique,
> que cette méthode ne nécessite pas de moyens techniques annexes tels qu'un téléphone ou des jetons matériels, ni d'infrastructure serveur complexe, ce qui peut se révéler pénible ou encombrant pour l'utilisateur,
> que cette méthode soit utilisable pour des applications classiques, type applications web ou applications mobiles ou même comme moyen de déverrouillage de téléphone ou de poste de travail,
> que cette méthode soit simple à utiliser pour les utilisateurs, pratiquement aussi simple que les mots de passe, sans en apporter les faiblesses.

Selon des modes de réalisation préférés de l'invention, tout ou partie des avantages suivants peuvent être obtenus :
> les utilisateurs disposent d'un moyen d'authentification plus fort que les mots de passe classiques,
> les utilisateurs disposent d'un moyen d'authentification de type mot de passe qui nécessite moins de complexité (longueur, caractères spéciaux, alternance d'alphabets, ...) qu'un mot de passe classiquement considéré robuste, ce qui le rend plus facile à retenir pour l'utilisateur,
> les utilisateurs ne peuvent pas utiliser le même mot de passe dans différents systèmes ou applications implémentant le même principe, puisqu'alors les grilles sont générées aléatoirement à partir de collection d'images de grandes tailles,
> la phase d'authentification ne peut pas être enregistrée par des applications pirates (type « keylogger » en langue anglaise) ou par des virus enregistrant l'activité de l'utilisateur,
> la phase d'authentification ne peut pas être enregistrée et rejouée à partir d'un enregistrement des échanges entre l'interface graphique et l'application par une application pirate (type « man in the middle » en langue anglaise), puisqu'alors les données échangées sont toujours aléatoires et temporaires,
> les nouvelles méthodes de découverte des PIN codes ou schémas de déverrouillage par enregistrement des déplacements oculaires de l'utilisateur sont inopérants sur les grilles aléatoires d'images aléatoirement réparties telles que proposées,
> la méthode d'authentification ne nécessite pas d'infrastructure externe, il n'y a donc pas de coût induit pour chaque authentification,
> la méthode d'authentification ne nécessite pas de jeton matériel, ni de certificat ou de téléphone mobile haut de gamme, tout type de matériel, éventuellement coûteux, que devrait sinon se procurer l'utilisateur,
> la méthode utilise des principes de sauvegarde simples, base de données, annuaires, peut fonctionner avec des algorithmes de hachage ordinaires, sans nécessiter de recourir à l'utilisation de moyen de cryptographie lourd avec sauvegarde de clés, pour obtenir un niveau de sécurité élevé,
➢ la méthode ne nécessite pas d'enregistrer des données privées de l'utilisateur, telles que par exemple : numéro de téléphone, empreintes digitales, etc ...
> la méthode s'applique à des applications lourdes, web, mobiles, ou même au verrouillage de téléphone mobile.

Suivant des modes de réalisation préférés, l'invention comprend une ou plusieurs des caractéristiques suivantes qui peuvent être utilisées séparément ou en combinaison partielle entre elles ou en combinaison totale entre elles, avec l'un ou l'autre des objets de l'invention précités.

De préférence, ledit ordre des images dans ce groupe d'images est affiché par l'application, aléatoirement à chaque nouvelle authentification dudit utilisateur, sous la forme d'une grille d'images réparties en lignes et en colonnes.

Ainsi, la répartition bidimensionnelle permet une ergonomie améliorée avec une mémorisation et une reconstitution plus faciles pour l'utilisateur, pour un nombre donné d'images, qu'avec un affichage monodimensionnel.

De préférence, ledit ordre des groupes d'images dans cet ensemble de groupes d'images est affiché par l'application, aléatoirement à chaque nouvelle authentification dudit utilisateur, sous la forme d'un carrousel de grilles d'images, et/ou ledit ordre des images dans ce groupe d'images, est affiché par l'application, aléatoirement à chaque nouvelle authentification dudit utilisateur, sous la forme d'une grille d'images réparties en lignes et en colonnes.

Ainsi, d'une part le défilement dynamique du nombre de grilles, le nombre de grilles étant plus faible et au moins deux fois ou plusieurs fois plus faible que le nombre d'images dans une grille, permet une sélection rapide et motivée de l'utilisateur, les grilles regroupant des images par thèmes de manière à faciliter le choix d'une grille et sa mémorisation par l'utilisateur, et d'autre part la répartition bidimensionnelle (et régulière) permet une ergonomie améliorée avec une mémorisation et une reconstitution plus faciles pour l'utilisateur, pour un nombre donné d'images, qu'avec un affichage monodimensionnel.

De préférence, le nombre de groupes d'images dans l'ensemble des groupes d'images est au moins deux fois, voire au moins cinq fois, plus faible que le nombre d'images dans un groupe d'images, que tous les groupes aient le même nombre d'images ou non.

Ainsi, l'ergonomie est améliorée, car d'une part, il est plus facile pour l'utilisateur de visualiser simultanément un nombre d'images relativement grand dans un groupe d'images, plutôt que de visualiser successivement un nombre de groupes d'images relativement grand dans un ensemble de groupes d'images, et d'autre part, un groupe d'images contenant beaucoup plus d'informations visuelles qu'une image, l'image est nettement plus facile à être reconnue par l'utilisateur rapidement qu'un groupe d'images.

De préférence, les images sont réparties dans les groupes d'images par thème.

Ainsi, l'ergonomie pour l'utilisateur est encore améliorée, car cela lui permet de discriminer visuellement plus rapidement les groupes d'images les uns des autres.

De préférence, l'utilisateur effectue graphiquement ces deux sélections : sur une interface graphique qui envoie le numéro du groupe sélectionné et/ou les coordonnées de chaque image sélectionnée dans ladite séquence, à une fonction d'authentification qui établit la correspondance entre d'une part ledit numéro et l'identifiant du groupe sélectionné et/ou d'autre part la séquence desdites coordonnées et la séquence des identifiants des images sélectionnées, la fonction d'authentification étant seule à pouvoir établir cette correspondance, à une base de données qui compare l'identifiant du groupe sélectionné et la séquence des identifiants des images sélectionnées respectivement avec l'identifiant du groupe du mot de passe enregistré pour ledit identifiant d'utilisateur et avec la séquence des identifiants des images du mot de passe enregistré pour ledit identifiant d'utilisateur, la base de données étant seule à pouvoir faire cette comparaison, et qui authentifie ledit utilisateur si ladite comparaison est positive mais qui refuse d'authentifier ledit utilisateur si ladite comparaison est négative.

La séparation des informations nécessaires pour reconstituer le mot de passe entre plusieurs modules dans l'application, rend le piratage de l'ensemble du mot de passe plus difficile, donc d'une part améliore la sécurité, mais d'autre part sans dégrader l'ergonomie pour l'utilisateur car cette séparation est totalement transparente pour l'utilisateur.

De préférence, ladite interface graphique, ladite fonction d'authentification et ladite base de données, sont sous le contrôle d'au moins deux acteurs indépendants, avantageusement sont respectivement sous le contrôle de trois acteurs indépendants, de préférence, lorsque ladite application fonctionne en client-serveur, ladite interface graphique est localisée sur le client, tandis que ladite fonction d'authentification et ladite base de données sont localisées sur le serveur.

La séparation de l'application entre plusieurs éléments indépendants, dont chacun possède une partie seulement des informations nécessaires pour reconstituer le mot de passe, d'une part améliore la sécurité, mais d'autre part sans dégrader l'ergonomie pour l'utilisateur car cette séparation est totalement transparente pour l'utilisateur.

De préférence, ledit ensemble de groupes d'images comprend un nombre de groupes d'images qui est compris entre 3 et 10, et/ou lesdits groupes d'images comprennent chacun un nombre d'images qui est compris entre 10 et 50.

Ces plages de valeurs, aussi bien pour le nombre de groupes d'images que pour le nombre d'images par groupe d'images, représentent une optimisation du compromis entre d'une part un niveau élevé de sécurité et d'autre part une ergonomie de qualité pour l'utilisateur.

De préférence, plusieurs applications distinctes utilisent les mêmes images mais avec une répartition différente entre leurs groupes d'images d'une application à l'autre.

Cela augmente encore le niveau de sécurité, car le piratage accidentel du mot de passe pour l'une des applications, n'entraînera pas le piratage des autres mots de passe pour les autres applications, l'utilisateur ayant été d'une part « obligé en douceur » de choisir des mots de passe bien différents entre les applications, mais d'autre part sans dégrader notablement l'ergonomie pour lui.

De préférence, le mot de passe graphique est stocké par l'application sous une forme non réversible, de préférence sous une forme hachée, cette forme hachée avantageusement ne présentant pas de collisions, cette forme hachée avantageusement utilisant une fonction de salage introduisant une information relative à l'utilisateur.

Ainsi, même si la base de données de l'application est attaquée, et si cette attaque réussit, l'information obtenue, à savoir une forme non réversible du mot de passe graphique de l'utilisateur, ne sera pas à elle seule suffisante pour pirater le compte de l'utilisateur. L'absence de collisions permet d'éviter que deux mots de passe graphiques appartenant à deux utilisateurs distincts ne donnent une seule et même forme hachée, ou à tout le moins que ce type de collision se produise rarement pour ne pas avoir d'effet en pratique. La fonction de salage introduisant une information relative à l'utilisateur complexifie la forme hachée du mot de passe graphique de l'utilisateur, rendant plus difficile une attaque de type force brute, même pour un pirate ayant accédé à la base de données de l'application où les mots de passe graphiques des utilisateurs sont stockés (sous une forme non réversible donc).

De préférence, soit, aucune image n'est commune à deux groupes d'images distincts l'un de l'autre, soit, si une ou plusieurs images sont communes à au moins deux groupes d'images distincts l'un de l'autre, alors pour au moins la moitié des groupes d'images, deux groupes d'images quelconques dans cette moitié des groupes d'images ont toujours moins de la moitié de leurs images en commun.

Ainsi, l'absence d'images en commun entre les différents groupes d'images ou à tout le moins la faible proportion d'images en commun entre les différents groupes d'images, rend le découpage en deux parties du mot de passe graphique de l'utilisateur encore plus efficace, et le piratage d'un tel mot de passe graphique encore plus difficile.

De préférence, ledit ordre des images dans ce groupe d'images est affiché par l'application, sous la forme d'une grille d'images réparties en lignes et en colonnes.

De préférence, ledit ordre des groupes d'images dans cet ensemble de groupes d'images est affiché par l'application, sous la forme d'un carrousel de grilles d'images, et/ou ledit ordre des images dans ce groupe d'images, est affiché par l'application, sous la forme d'une grille d'images réparties en lignes et en colonnes.

Les images sont des dessins et non pas de simples caractères alphanumériques ; les images étant notamment des dessins figuratifs représentant un objet ou une action, porteurs de sens pour l'utilisateur, seront donc plus faciles à mémoriser pour l'utilisateur que des caractères d'alphabet exotique ou des couples de caractères par exemple. Par ailleurs, le nombre de telles images pouvant être rassemblées dans un « alphabet d'images » est bien supérieur, et de loin, au nombre de caractères alphanumériques facilement reconnaissables par la majorité des utilisateurs.

D'autres caractéristiques et avantages de l'invention apparaîtront à la lecture de la description qui suit d'un mode de réalisation préféré de l'invention, donné à titre d'exemple et en référence aux dessins annexés.

### BREVE DESCRIPTION DES DESSINS

La figure 1 représente schématiquement un exemple de mot de passe graphique utilisé dans une méthode d'authentification selon un mode de réalisation de l'invention.
La figure 2 représente schématiquement un exemple d'ensemble de groupes d'images utilisé dans une méthode d'authentification selon un mode de réalisation de l'invention.
La figure 3A représente schématiquement un exemple de groupe d'images utilisé dans une méthode d'authentification selon un mode de réalisation de l'invention.
La figure 3B représente schématiquement un exemple du même groupe d'images qu'à la figure 3A, mais présentant un ordre d'affichage différent des images, utilisé dans une méthode d'authentification selon un mode de réalisation de l'invention.
La figure 4 représente schématiquement un exemple de découpage d'une application en une interface graphique, en une fonction d'authentification et en une base de données, utilisé dans une méthode d'authentification selon un mode de réalisation de l'invention.

### DESCRIPTION DETAILLEE DE L'INVENTION

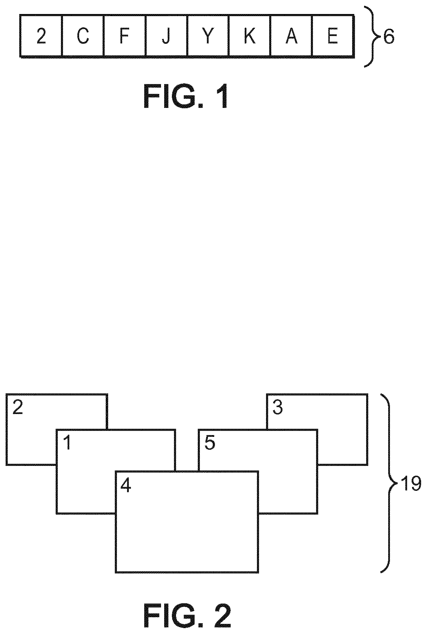

Pour l'ensemble des figures 1 à 4, les numéros 1 à 5 représentent respectivement des groupes d'images, par exemple des grilles d'images, tandis que les lettres A à Y représentent des images, par exemple des émoticons. Même si seulement 25 images (A à Y) sont représentées dans le mode de réalisation décrit, ces 25 images, correspondant à la grille 2, appartiennent à une base de données d'images bien plus grande, d'au moins 100 images, voire de 1000 images ou plus. De la même manière seulement 5 grilles 1 à 5 sont considérées car seulement 5 grilles sont proposées au choix de chaque utilisateur, mais ces 5 grilles appartiennent à une base de données plus vaste d'au moins 10 ou d'au moins 20 grilles, voire de 50 grilles ou plus, de sorte que des grilles présentées à deux utilisateurs distincts peuvent être différentes en totalité ou en majorité. Préférentiellement, les images d'un groupe d'images ne se retrouvent pas du tout dans un autre groupe d'images. Optionnellement, certaines images peuvent être communes à plusieurs groupes d'images. Dans ce cas, avantageusement, pour au moins la moitié de l'ensemble des groupes d'images, deux groupes d'images distincts n'ont au plus qu'une minorité d'images en commun.

La figure 1 représente schématiquement un exemple de mot de passe graphique utilisé dans une méthode d'authentification selon un mode de réalisation de l'invention.

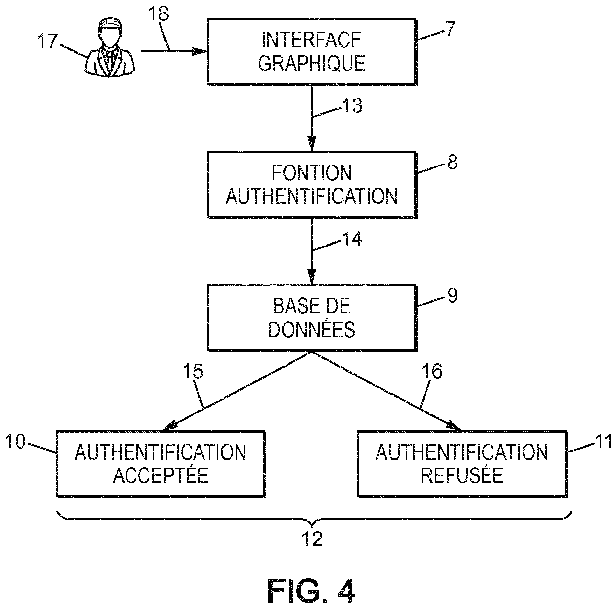

Le mot de passe graphique 6 comprend successivement d'abord un identifiant d'une grille d'images, puis une suite d'identifiants respectifs de plusieurs images appartenant à cette grille d'images. Dans l'exemple représenté, le mot de passe graphique 6 est constitué par la succession de l'identifiant de la grille 2 et des images C, F, J, Y, K, A, E, appartenant à cette grille 2. Ce mot de passe 6 est associé à l'identifiant d'un utilisateur particulier, par exemple l'utilisateur 17 comme représenté sur la figure 4.

La figure 2 représente schématiquement un exemple d'ensemble de groupes d'images utilisé dans une méthode d'authentification selon un mode de réalisation de l'invention.

Un carrousel 19 de 5 grilles 1 à 5 est présenté à l'utilisateur qui peut faire tourner les grilles et sélectionner celle qui est au centre du carrousel 19. Là, dans la position du carrousel 19 représentée sur la figure 2, l'utilisateur pourrait sélectionner la grille 4, mais il va faire tourner le carrousel 19 jusqu'à ce que la grille 2, affichée à l'extrémité gauche, se retrouve au centre pour qu'il puisse la sélectionner puisque c'est la grille 2 qui est en tête de son mot de passe graphique comme représenté sur la figure 1. Lors d'une prochaine authentification, la grille 2 pourra se retrouver affichée au centre ou bien à l'extrémité droite, ou bien ailleurs, sa position étant aléatoire et pratiquement différente à chaque authentification. Ce sont toujours ces 5 mêmes grilles qui seront proposées à l'utilisateur 17, mais un autre jeu de grilles pourrait être proposé à un autre utilisateur, avec aucune ou peu de grilles en commun.

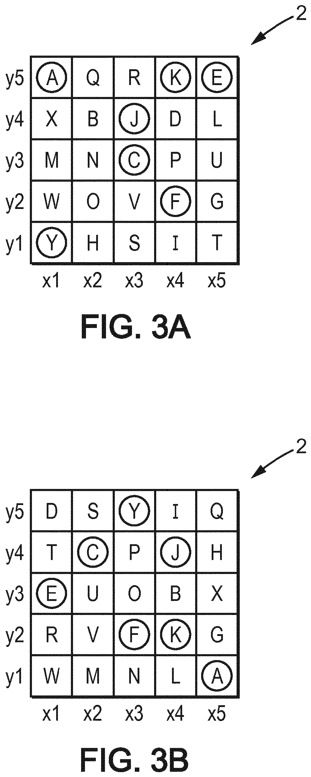

La figure 3A représente schématiquement un exemple de groupe d'images utilisé dans une méthode d'authentification selon un mode de réalisation de l'invention.

Les images de la grille 2, les 25 images représentées par les sigles A à Y, sont des dessins, de préférence des émoticons du standard « Unicode », par exemple ceux de la version de janvier 2017. Ces dessins sont liés à un même thème et de manière à ce qu'une séquence formée par l'utilisateur puisse avoir un sens et être plus facilement mémorisable par l'utilisateur même si le nombre d'images est notable, comme 5 à 7 images, par exemple 7 images comme pour le mot de passe graphique représenté sur la figure 1. La grille 2 représente 25 images A à Y réparties dans un carré de 5 lignes par 5 colonnes, respectivement repérées par les coordonnées x1 à x5 pour les colonnes et y1 à y5 pour les lignes.

Lorsque l'utilisateur va devoir taper son mot de passe graphique sur cette grille 2, il va taper successivement sur les images C, F, J, Y, K, A, E, ce qui va correspondre à la série de couples de coordonnées suivantes : x3/y3, x4/y2, x3/y4, x1/y1, x4/y5, x1/y5, x5/y5. L'interface graphique de son appareil portable ne connaîtra que la série de coordonnées x3/y3, x4/y2, x3/y4, x1/y1, x4/y5, x1/y5, x5/y5, sans pouvoir remonter à la séquence d'images C, F, J, Y, K, A, E. Supposons qu'une application pirate ait mémorisé la série de coordonnées x3/y3, x4/y2, x3/y4, x1/y1, x4/y5, x1/y5, x5/y5, et voyons ce qu'elle peut en faire.

La figure 3B représente schématiquement un exemple du même groupe d'images qu'à la figure 3A, mais présentant un ordre d'affichage différent des images, utilisé dans une méthode d'authentification selon un mode de réalisation de l'invention.

Les images de la grille 2, les 25 images représentées par les sigles A à Y, sont également réparties dans un carré de 5 lignes par 5 colonnes, respectivement repérées par les coordonnées x1 à x5 pour les colonnes et y1 à y5 pour les lignes, comme sur la figure 3A, mais dans un ordre totalement différent de celui de la figure 3A, l'affichage des images dans la grille 2 étant aléatoire et pratiquement différent à chaque nouvelle authentification de l'utilisateur.

Lorsque, pour une autre authentification, l'utilisateur va à nouveau devoir taper son mot de passe graphique sur cette grille 2, il va taper successivement sur les images C, F, J, Y, K, A, E, ce qui va correspondre à la série de couples de coordonnées suivantes : x2/y4, x3/y2, x4/y4, x3/y5, x4/y2, x5/y1, x1/y3, laquelle série est complètement différente de la série de couples de coordonnées suivantes : x3/y3, x4/y2, x3/y4, x1/y1, x4/y5, x1/y5, x5/y5, tapée par l'utilisateur lors de sa précédente authentification. Cette fois encore, l'interface graphique de son appareil portable ne connaît que la série de coordonnées x2/y4, x3/y2, x4/y4, x3/y5, x4/y2, x5/y1, x1/y3, sans pouvoir non plus remonter à la séquence d'images C, F, J, Y, K, A, E. le caractère complètement différent entre les deux séries de coordonnées, lesquelles n'ont aucun rapport l'une avec l'autre, les rend totalement inutilisables pour essayer de pirater le mot de passe graphique de l'utilisateur. Supposons encore qu'une application pirate ait mémorisé la série de coordonnées x2/y4, x3/y2, x4/y4, x3/y5, x4/y2, x5/y1, x1/y3 ; il est clair que cette application pirate ne peut rien en faire. Lors d'une authentification suivante, l'ordre d'affichage des images A à Y dans la grille 2, sera encore différent, la nouvelle série de coordonnées alors obtenue, même si piratée, ne sera toujours d'aucun secours à l'application pirate pour essayer de pirater le mot de passe graphique C, F, J, Y, K, A, E, de l'utilisateur 17, le mot de passe complet étant : 2, C, F, J, Y, K, A, E (l'identifiant de grille étant en tête du mot de passe graphique).

La figure 4 représente schématiquement un exemple de découpage d'une application en une interface graphique, en une fonction d'authentification et en une base de données, utilisé dans une méthode d'authentification selon un mode de réalisation de l'invention.

Une application 12 comprend une interface graphique 7, une fonction authentification 8 et une base de données 9. Une opération d'entrée 18 de son mot de passe graphique par l'utilisateur 17 est réalisée sur l'interface graphique 7.

Une opération d'envoi 13 par l'interface graphique 7 du numéro du groupe sélectionné par l'utilisateur 17 (lors de son entrée 18 de son mot de passe sur l'interface graphique 17 réalisée précédemment) et des coordonnées de chaque image sélectionnée par l'utilisateur 17 dans la séquence, est réalisée à destination de la fonction d'authentification 8.

Lors d'une opération de mise en correspondance 14, la fonction d'authentification 8 établit la correspondance entre d'une part le numéro et l'identifiant du groupe sélectionné par l'utilisateur 17et d'autre part la séquence des coordonnées et la séquence des identifiants des images sélectionnées par l'utilisateur 17, la fonction d'authentification 8 étant seule à pouvoir établir cette correspondance.

Lors d'une opération de comparaison 15 et 16, la base de données 9 compare l'identifiant du groupe sélectionné et la séquence des identifiants des images sélectionnées respectivement avec l'identifiant du groupe du mot de passe enregistré pour l'identifiant de l'utilisateur 17 et avec la séquence des identifiants des images du mot de passe enregistré pour l'identifiant de l'utilisateur 17, la base de données 9 étant seule à pouvoir faire cette comparaison. A la fin de cette opération de comparaison 15 et 16, la base de données 9 soit authentifie 15 l'utilisateur 17 si la comparaison est positive, aboutissant à une authentification acceptée 10 de l'utilisateur 17, soit refuse 16 d'authentifier l'utilisateur 17 si la comparaison est négative, aboutissant à une authentification refusée 11 de l'utilisateur 17.

Idéalement, les trois parties de l'application 12, à savoir interface graphique 7, fonction d'authentification 8, et base de données 9, sont sous le contrôle respectif de trois acteurs indépendants, pour une sécurité maximale. Sinon, de manière moins exigeante, dans le cas d'une application 12 qui est client/serveur, l'interface graphique 7 est sous le contrôle de l'appareil client manipulé par l'utilisateur 17, tandis que la fonction d'authentification 8 et la base de données 9 sont sous le contrôle soit d'un serveur soit respectivement de deux serveurs distincts.

Des interactions, entre les différentes parties de l'application 12 et avec l'utilisateur 17, similaires à celles décrites précédemment pour la méthode d'authentification de l'utilisateur 17 grâce à son mot de passe graphique, sont utilisées pour la méthode de création par l'utilisateur 17 de son mot de passe graphique.

Les différentes étapes, de la méthode d'authentification d'un utilisateur grâce à son mot de passe et de la méthode de création de mot de passe graphique par un utilisateur, ayant été décrites en liaison avec les figures 1 à 4, dans un mode de réalisation de l'invention, un autre exemple très détaillé de mise en oeuvre de l'invention va maintenant être décrit, toujours en liaison avec les figures 1 à 4.

Dans le standard « Unicode Janvier 2017 », il y a 2666 émoticons (« émoticon » étant une marque déposée), ce nombre augmentant à chaque révision de la norme « Unicode ». Cet « alphabet d'images » est bien plus important qu'un alphabet latin classique, et bien plus parlant que d'autres alphabets comme l'alphabet grec ou cyrillique. Cet « alphabet d'images » permet un très grand nombre de combinaisons : 4 caractères émoticons permettent de réaliser 50.517.352.293.136 combinaisons, 5 caractères émoticons permettent de réaliser environ 1.35^{E}17 combinaisons, et encore bien plus pour 6 ou 7 caractères émoticons.

Le serveur d'authentification « Evidian Web Access Manager » peut implémenter ce principe en lieu et place d'une méthode classique d'authentification par mot de passe simple (par exemple alphanumérique ou équivalent), avec un niveau d'authentification bien plus élevé avec l'authentification par mot de passe graphique proposé par l'invention qu'avec une authentification classique par mot de passe simple (par exemple alphanumérique ou équivalent). Les applications mobiles « Evidian Authenticator » et « Evidian QRentry » utilisent une authentification classique par PIN code ou par empreinte digitale, cette authentification classique pouvant alors être remplacée par la méthode d'authentification proposée par l'invention et basée sur un mot de passe graphique bien sécurisé.

Le principe de la création du mot de passe graphique 6 par un utilisateur 17 sur une application 12 se déroule de la manière suivante. D'abord, l'utilisateur 17 est invité à créer un mot de passe 6 au travers de l'interface graphique 7 de l'application 12. Puis, l'utilisateur 17 saisit son identifiant Id dans l'interface 7. Ensuite, l'application 12 génère de manière aléatoire une série de grilles 1 à N composées d'images. Ces images peuvent être issues, par exemple, soit d'une collection propre à l'application 12 contenant des images facilement identifiables, soit d'une collection bien connue, par exemple des images de l'alphabet « émoticon ».

Les grilles Grl, 1 à N, ont une taille configurable, typiquement 5 lignes par 5 colonnes contenant donc 25 images chacune. Chaque image Imj possède un identifiant unique IdImj connu de l'application 12.

L'application 12 affiche dans l'interface graphique 7, les différentes grilles Grl générées aléatoirement dans un carrousel 19 de sélection. Le nombre de grilles 1 à N générées (pour chaque utilisateur) est dépendant de l'application, typiquement entre 3 et 5, par exemple ici 5. Les identifiants des images IdImj ne sont pas transmis dans l'interface graphique 7 des images proposées à l'utilisateur 17. Chaque image Imj est repérée dans sa grille Grl par ses coordonnées (xi, yk) selon un repère choisi par l'application 12 selon son mode d'implémentation. L'application 12 connaît l'algorithme de traduction entre les positions des images Imj affichées dans l'interface graphique 7 et les identifiants IdImj de chaque image Imj de chaque grille Grl.

L'application 12 sauvegarde temporairement un ensemble de grille Grl, et pour chaque grille Grl, les informations suivantes sont enregistrées :
> un identifiant global GrSN pour chaque grille Grl, cet identifiant est généré aléatoirement, et il est unique dans l'ensemble de toutes les grilles Grl générées pour tous les utilisateurs,
> un identifiant local Gri, de 1 à 5, qui identifie la grille Grl dans le carrousel 19 de sélection et permettra de retrouver son identifiant GrSN, un tableau de relation Gri<>GrSN étant conservé temporairement par l'application 12,
> l'identifiant IdImj de chaque image Imj de sa grille Grl,
> les coordonnées (xi,yk) de chaque image Imi,
> le repère utilisé, par exemple (x0,y0) en bas à gauche (x5,y5) en haut à droite, etc ...

L'utilisateur 17 choisit une des grilles Grl parmi les différentes grilles de l'ensemble de grilles 1 à 5 sélectionnable. L'application 12, au travers de l'interface graphique 7, invite l'utilisateur 17 à choisir une suite d'images A à Y disposées parmi la grille numérotée 2 sélectionnée par l'utilisateur 17. La suite d'images A à Y choisie par l'utilisateur 17 est suffisamment longue, d'au moins 6 images, par exemple 7 images comme sur la figure 1. La suite d'images A à Y est choisie par l'utilisateur 17 dans le but de la mémoriser facilement. La technique de mémorisation la plus simple est de se créer une histoire personnelle à partir de la suite d'images sélectionnée.

L'utilisateur 17 valide son choix dans l'interface graphique 7. L'interface graphique 7 transmet à l'application 12 les informations suivantes :
➢ l'identifiant (Id) de l'utilisateur 17,
➢ le numéro de la grille 2 sélectionnée par l'utilisateur 17,
➢ la suite des positions (xi,yk) des images A à Y sélectionnées par l'utilisateur dans la grille 2.

L'application 12 reçoit les informations de l'interface graphique 7. L'application 12 utilise plusieurs zones de stockage permanent de ces informations.

Soit ColImg, la collection de toutes les images Imj du système et de leurs identifiants IdImj.

Soit ColGr, une base de données de toutes les grilles Grl générées et utilisées par les utilisateurs. Chaque grille Grl est identifiée par un identifiant GrSN et contient la liste des identifiants IdImj des images composant cette grille. L'identifiant GrSN est aléatoire et unique.

La base de données 9 est en fait ici plus particulièrement divisée en deux bases de données distinctes entre elles, une première base de données B0 et une deuxième base de données B1. La base de données B0 contient pour chaque utilisateur 17 identifié par son identifiant Id, la liste des identifiants des grilles GrSN générées et affichées dans le carrousel 19 de création de mot de passe graphique 6 ou lors de l'authentification.

La base de données B1, typiquement un annuaire, contient pour chaque utilisateur 17 identifié par son identifiant Id, un hachage d'une chaîne composée des éléments (GrSn)(IdImj)₍₀₎(IdImj)₍₁₎ ...(IdImj)₍ₙ₎. La fonction de hachage utilisée est non réversible et présente pas ou peu de collisions, c'est par exemple « MD5 », ou « SHA1 », ou « SHA2 », ou « bcrypt », etc .... La fonction de hachage utilise une fonction de « salage » (intégrant une donnée propre à l'utilisateur 17) pour éviter les attaques par force brute.

L'application 12, après réception des informations de l'interface graphique 7, réalise les opérations suivantes :
> sur le numéro de la grille Gri (numéro local d'une grille donnée dans le carrousel 19 considéré pour l'utilisateur 17), sélectionnée par l'utilisateur 17, est appliqué une opération inverse de traduction (Gri)>(GrSN),
> sur la suite des positions (xi,yk) est appliquée une opération de transformation inverse par rapport au repère choisi, et une traduction (xi,yk) vers IdImj est opérée pour obtenir la suite des identifiants IdImj des images choisies par l'utilisateur 17, cette traduction est appliquée sur l'identifiant de grille GrSN obtenu à l'étape précédente.

Puis, l'application 12 sauvegarde la liste des grilles Grl qui ont été affichées dans le carrousel 19 de sélection, dans la base ColGr. Chaque grille est enregistrée avec son identifiant GrSN et la liste des images identifiées par leurs identifiants IdImj.

Ensuite, l'application sauvegarde dans la base B0 les informations suivantes :
> l'identifiant Id de l'utilisateur 17,
➢ la liste des grilles 1 à 5 présentées dans le carrousel 19 et associées à l'utilisateur 17. Les grilles Grl sont identifiées par des identifiants GrSN, seuls ces identifiants étant enregistrés dans la fiche associée à l'utilisateur 17 (avec les numéros locaux Gri correspondants de ces grilles), le contenu des grilles Grl n'étant pas enregistré dans la base B0.

Après quoi, l'application 12 sauvegarde dans la base B1, les informations de « mot de passe » 6 associées à l'utilisateur 17. Ces informations sont composées selon la formule suivante : [(GrSn)(IdImj)₍₀₎(IdImj)₍₁₎ ...(IdImj)₍ₙ₎ ], où GrSn est l'identifiant de la grille 2 choisie par l'utilisateur 17 et (IdImj)₍ₙ₎ est la suite des images sélectionnées par l'utilisateur 17 dans cette grille 2 sélectionnée. Ces informations sont transformées en chaînes de caractères pour être plus facilement manipulables, par exemple en séparant chaque item par un « ; » et en appliquant une transformation de type « Base64 » (aboutissant à une chaîne finale uniquement alphanumérique) sur la chaîne résultante. Le principe de sauvegarde du mot de passe dans la base B1 va dépendre de la nature de la base de données B1. Pour un annuaire, le mot de passe graphique 6 est enregistré comme une chaîne mot de passe classique, et le mécanisme de hachage implémenté par l'annuaire sera utilisé. Pour une base de données B1 ne disposant pas de mécanisme de hachage, la chaîne mot de passe sera hachée avant enregistrement, en utilisant des mécanismes de hachage simples et robustes.

A l'issue de toutes ces opérations, le mot de passe graphique 6 de l'utilisateur 17 est donc créé. En résumé, les différentes informations suivantes sont enregistrées :
> dans la collection de grilles ColGr, les grilles et leur contenu formé par les identifiants d'images IdImj de toutes les grilles de tous les utilisateurs,
> dans la base B0, la liste des grilles 1 à 5 associées à chacun des utilisateurs 17,
➢ dans la base B1, le hachage du mot de passe graphique 6 dans la fiche identité de l'utilisateur quand la base B1 est un annuaire. Le mot de passe graphique 6 n'est pas enregistré sous une forme réversible, où que ce soit dans l'application 12.

Le principe de l'authentification de l'utilisateur 17 est de vérifier que l'utilisateur 17 est en mesure de sélectionner une suite d'images Imj telles qu'elles ont été enregistrées lors de l'étape de création du mot de passe graphique 6.

L'utilisateur 17 saisit son identifiant Id dans l'interface graphique 7. L'interface graphique 7 transmet l'identifiant Id à l'application 12. L'application 12 détermine si l'identifiant Id de l'utilisateur 17 est présent dans sa base B0.

S'il n'est pas présent, l'application 12 peut, au choix :
➢ soit générer un message d'erreur invitant l'utilisateur 17 à saisir un autre identifiant,
➢ soit renvoyer l'utilisateur 17 vers l'interface graphique 7 de création du mot de passe 6,
➢ soit afficher les étapes d'authentification en utilisant des données aléatoires, évitant ainsi de dévoiler l'existence ou la non-existence de cet utilisateur correspondant à l'identifiant erroné,

Si l'identifiant Id est présent dans la base B0, l'application 12 :
➢ obtient de la base B0, à partir de l'identifiant Id de l'utilisateur 17, la liste des grilles Grl identifiées par leur identifiant GrSN,
➢ obtient de la base B0 la liste des identifiants IdImj des images Imj qui composent les grilles identifiées par leur identifiant GrSN,

Pour chaque identifiant de grille GrSN, l'application 12 obtient de la collection ColImg les images identifiées par leur identifiant IdImj. Pour chaque identifiant de grille GrSN, l'application 12 place aléatoirement les identifiants d'images IdImj dans une grille Grl de 5 lignes par 5 colonnes (par exemple dans une implémentation à 25 images) et mémorise les coordonnées (xi,yk) dans un repère connu de l'application 12. Le tableau de correspondance des coordonnées (xi,yk) vers les identifiants d'images IdImj est conservé temporairement pendant tout le processus d'authentification.

L'application 12 établit aléatoirement un tableau de transformation des identifiants globaux GrSN en identifiants locaux Gri qui seront transmis à l'interface graphique 7. L'application 12 transmet à l'interface graphique 7, pour chaque identifiant de grille Gri la liste des coordonnées (xi,yk) et la liste des images à afficher. L'application 12 pourrait aussi transmettre l'ensemble des images d'une grille sous la forme d'une seule image contenant toutes les images de la grille prédisposées en une seule image.

L'interface graphique 7 reçoit de l'application 12 une liste de grilles et d'images contenant :
➢ l'identifiant Gri de la grille Grl dans le carrousel 19,
➢ les images qui composent la grille, ou une seule image contenant l'ensemble de ces images,
➢ éventuellement, les coordonnées (xi,yk) des images de la grille ; ces coordonnées (xi,yk) peuvent être implicitement connues et partagées entre l'interface graphique 7 et l'application 12, et alors simplement dépendre de l'ordre des images dans la liste d'images.

L'interface graphique 7 dispose alors les grilles ayant pour identifiants Gri 1 à 5 dans un carrousel de sélection 19.

L'interface graphique 7 dispose les images selon les repères (xi,yk) ou rassemblées dans une seule image en fonction du mode de transmission des images par l'application 12. L'utilisateur 17 sélectionne la grille 2 qui contient les images de son mot de passe graphique 6. L'utilisateur 17 sélectionne une par une les images qui composent son mot de passe graphique 6.

L'interface graphique 7 présente plusieurs boutons et champs, comme par exemple :
➢ un champ affichant, par exemple, un caractère « * » pour chaque image sélectionnée et qui permet à l'utilisateur17 d'avoir une indication visuelle à chaque image sélectionnée,
➢ un bouton pour effacer la sélection de la dernière image,
➢ un bouton pour effacer l'ensemble des images sélectionnées,
➢ un bouton pour valider la liste des images sélectionnées.

L'utilisateur 17 valide son mot de passe graphique 6, et l'interface graphique 7 transmet alors à l'application 12 les informations suivantes :
➢ le numéro de la grille, c'est-à-dire l'identifiant local de la grille Gri, ici 2, sélectionnée par l'utilisateur 17,
➢ la suite des positions (xi,yk) des images sélectionnées par l'utilisateur 17 dans la grille 2 sélectionnée.

L'application 12 reçoit les informations de l'interface graphique 7. L'application 12 réalise alors les opérations suivantes :
➢ sur le numéro de la grille Gri, ici 2, sélectionnée par l'utilisateur 17, est appliqué une opération inverse de traduction Gri>GrSN,
➢ sur la suite des positions (xi,yk) est appliquée une opération de transformation inverse par rapport au repère choisi, et une traduction des postions (xi,yk) vers les identifiants d'images IdImj est opérée pour obtenir la suite des identifiants d'images IdImj sélectionnées par l'utilisateur 17, cette traduction étant appliquée sur la grille GrSN obtenue à l'étape précédente.

Le mot de passe graphique 6 est composé selon la formule suivante [(GrSn)(IdImj)₍₀₎(IdImj)₍₁₎ ...(IdImj)₍ₙ₎ ] où GrSn est l'identifiant de la grille choisie par l'utilisateur 17 et (IdImj)₍ₙ₎ est la suite des images sélectionnées par l'utilisateur 17. Conformément à la phase de création du mot de passe graphique 6, les informations du mot de passe graphique 6 sont transformées en chaînes de caractères pour être plus facilement manipulables, par exemple en séparant chaque item par un « ; » et en appliquant une transformation « Base64 » sur la chaîne résultante.

Si la base de données B1 est un annuaire, le mot de passe graphique 6 sera transmis tel quel à un annuaire, qui comparera le hachage de ce mot de passe graphique 6 avec le hachage du mot de passe graphique 6 associé à l'identifiant Id de l'utilisateur 17. La fonction interne de hachage de l'annuaire est utilisée.

Alternativement, si la base de données B1 est une base de données classique, le hachage du mot de passe graphique 6 sera calculé par l'application 12 et comparé au hachage du mot de passe graphique 6 associé à l'identifiant Id de l'utilisateur 17.

Si la comparaison du hachage du mot de passe graphique 6 entré par l'utilisateur 17 est identique à celui sauvegardé dans la base de données B1 pour ce même identifiant Id d'utilisateur 17, alors l'utilisateur 17 est authentifié. Dans le cas contraire, l'authentification est rejetée.

Bien entendu, la présente invention n'est pas limitée aux exemples et au mode de réalisation décrits et représentés, mais elle est susceptible de nombreuses variantes accessibles à l'homme de l'art.

## Revendications

1. Méthode d'authentification d'un utilisateur (17) par identifiant d'utilisateur et par mot de passe graphique associé (6), **caractérisée en ce que** :
> le mot de passe graphique (6) comprend deux parties :
o une première partie obtenue par une première sélection d'un groupe d'images (1-5) parmi plusieurs groupes d'images (1-5),
∘ une deuxième partie obtenue par une deuxième sélection d'une séquence de plusieurs images (A-Y) dans le groupe d'images sélectionné (1-5),
➢ l'utilisateur (17) donne son identifiant d'utilisateur à une application (12), et effectue graphiquement :
∘ une première sélection d'un groupe d'images (1-5) dans un ensemble de plusieurs groupes d'images (1-5), l'ordre des groupes d'images (1-5) dans cet ensemble de groupes d'images (1-5) étant affiché par l'application (12) aléatoirement à chaque nouvelle authentification dudit utilisateur (17),
∘ une deuxième sélection d'une séquence de plusieurs images (A-Y) dans ce groupe d'images (1-5), l'ordre des images (A-Y) dans ce groupe d'images (1-5) étant affiché par l'application (12) aléatoirement à chaque nouvelle authentification dudit utilisateur (17),
➢ l'application (12) :
∘ repère d'une part la position du groupe d'images (1-5) sélectionné dans ledit ensemble de groupes d'images (1-5) et d'autre part la position de chaque image (A-Y) sélectionnée dans ladite séquence,
∘ établit (14) la correspondance, d'une part entre la position du groupe d'images (1-5) sélectionné et l'identifiant du groupe d'images (1-5) sélectionné, et d'autre part entre la séquence des positions des images (A-Y) sélectionnées et la séquence des identifiants des images (A-Y) sélectionnées,
∘ compare (15-16), d'une part l'identifiant du groupe d'images (1-5) sélectionnées avec l'identifiant du groupe d'images (1-5) du mot de passe (6) enregistré pour ledit identifiant d'utilisateur (17), et d'autre part la séquence des identifiants des images sélectionnées (A-Y) avec la séquence des identifiants des images (A-Y) du mot de passe (6) enregistré pour ledit identifiant d'utilisateur (17),
∘ l'application (12) étant seule à pouvoir établir cette correspondance et/ou l'application (12) étant seule à pouvoir faire cette comparaison,
∘ authentifie (15) ledit utilisateur (17) si ladite comparaison est positive mais refuse (16) d'authentifier ledit utilisateur (17) si ladite comparaison est négative.

2. Méthode d'authentification selon la revendication 1, **caractérisée en ce que** :
➢ ledit ordre des groupes d'images (1-5) dans cet ensemble de groupes d'images (1-5) est affiché par l'application (12), aléatoirement à chaque nouvelle authentification dudit utilisateur (17), sous la forme d'un carrousel (19) de grilles d'images (1-5),
➢ et/ou ledit ordre des images (A-Y) dans ce groupe d'images (1-5) est affiché par l'application (12), aléatoirement à chaque nouvelle authentification dudit utilisateur (17), sous la forme d'une grille d'images (1-5) réparties en lignes et en colonnes.

3. Méthode d'authentification selon l'une quelconque des revendications précédentes, **caractérisée en ce que** le nombre de groupes d'images (1-5) dans l'ensemble des groupes d'images (1-5) est au moins deux fois, voire au moins cinq fois, plus faible que le nombre d'images (A-Y) dans un groupe d'images (1-5), que tous les groupes (1-5) aient le même nombre d'images (A-Y) ou non.

4. Méthode d'authentification selon l'une quelconque des revendications précédentes, **caractérisée en ce que** les images (A-Y) sont réparties dans les groupes d'images (1-5) par thème.

5. Méthode d'authentification selon l'une quelconque des revendications précédentes, **caractérisée en ce que** l'utilisateur (17) effectue graphiquement ces deux sélections :
➢ sur une interface graphique (7) qui envoie le numéro du groupe (1-5) sélectionné et/ou les coordonnées de chaque image (A-Y) sélectionnée dans ladite séquence,
➢ à une fonction d'authentification (8) qui établit la correspondance entre d'une part ledit numéro et l'identifiant du groupe (1-5) sélectionné et/ou d'autre part la séquence desdites coordonnées et la séquence des identifiants des images (A-Y) sélectionnées, la fonction d'authentification (8) étant seule à pouvoir établir cette correspondance,
➢ à une base de données (9) :
∘ qui compare (15-16) l'identifiant du groupe (1-5) sélectionné et la séquence des identifiants des images (A-Y) sélectionnées respectivement avec l'identifiant du groupe (1-5) du mot de passe (6) enregistré pour ledit identifiant d'utilisateur (17) et avec la séquence des identifiants des images (A-Y) du mot de passe (6) enregistré pour ledit identifiant d'utilisateur (17), la base de données (9) étant seule à pouvoir faire cette comparaison,
∘ et qui authentifie (15) ledit utilisateur (17) si ladite comparaison est positive mais qui refuse (16) d'authentifier ledit utilisateur (17) si ladite comparaison est négative.

6. Méthode d'authentification selon la revendication 5, **caractérisée en ce que** :
➢ ladite interface graphique (7), ladite fonction d'authentification (8) et ladite base de données (9), sont sous le contrôle d'au moins deux acteurs indépendants, avantageusement sont respectivement sous le contrôle de trois acteurs indépendants,
> de préférence, lorsque ladite application (12) fonctionne en client-serveur, ladite interface graphique (7) est localisée sur le client, tandis que ladite fonction d'authentification (8) et ladite base de données (9) sont localisées sur le serveur.

7. Méthode d'authentification selon l'une quelconque des revendications précédentes, **caractérisée en ce que** :
> ledit ensemble de groupes d'images (1-5) comprend un nombre de groupes d'images (1-5) qui est compris entre 3 et 10,
> et/ou lesdits groupes d'images (1-5) comprennent chacun un nombre d'images (A-Y) qui est compris entre 10 et 50.

8. Méthode d'authentification selon l'une quelconque des revendications 1 à 7, **caractérisée en ce que** plusieurs applications (12) distinctes utilisent les mêmes images (A-Y) mais avec une répartition différente entre leurs groupes d'images (1-5) d'une application (12) à l'autre.

9. Méthode d'authentification selon l'une quelconque des revendications précédentes, **caractérisée en ce que** :
➢ le mot de passe graphique (6) est stocké par l'application (12) sous une forme non réversible,
o de préférence sous une forme hachée,
▪ cette forme hachée avantageusement ne présentant pas de collisions,
▪ cette forme hachée avantageusement utilisant une fonction de salage introduisant une information relative à l'utilisateur (17).

10. Méthode d'authentification selon l'une quelconque des revendications 1 à 9, **caractérisée en ce que** :
> soit, aucune image (A-Y) n'est commune à deux groupes d'images (1-5) distincts l'un de l'autre,
> soit, si une ou plusieurs images (A-Y) sont communes à au moins deux groupes d'images (1-5) distincts l'un de l'autre, alors pour au moins la moitié des groupes d'images (1-5), deux groupes d'images (1-5) quelconques dans cette moitié des groupes d'images (1-5) ont toujours moins de la moitié de leurs images (A-Y) en commun.

## Patentansprüche

1. Verfahren zur Authentifizierung eines Benutzers (17) durch eine Benutzerkennung und ein zugeordnetes grafisches Passwort (6), **dadurch gekennzeichnet, dass**:
➢ das grafische Passwort (6) zwei Teile umfasst:
o einen ersten Teil, der durch eine erste Auswahl einer Gruppe von Bildern (1-5) aus mehreren Gruppen von Bildern (1-5) erhalten wird,
o einen zweiten Teil, der durch eine zweite Auswahl einer Sequenz von mehreren Bildern (A-Y) in der ausgewählten Gruppe von Bildern (1-5) erhalten wird,
➢ der Benutzer (17) seine Benutzerkennung an eine Anwendung (12) weitergibt und folgendes grafisch ausführt:
o eine erste Auswahl einer Gruppe von Bildern (1-5) aus einem Satz von mehreren Gruppen von Bildern (1-5), wobei die Reihenfolge der Gruppen von Bildern (1-5) in diesem Satz von Gruppen von Bildern (1-5) von der Anwendung (12) bei jeder neuen Authentifizierung des Benutzers (17) zufällig angezeigt wird,
∘ eine zweite Auswahl einer Sequenz von mehreren Bildern (A-Y) in dieser Gruppe von Bildern (1-5), wobei die Reihenfolge der Bilder (A-Y) in dieser Gruppe von Bildern (1-5) von der Anwendung (12) bei jeder neuen Authentifizierung des Benutzers (17) zufällig angezeigt wird,
> die Anwendung (12):
o einerseits die Position der ausgewählten Gruppe von Bildern (1-5) in dem genannten Satz von Gruppen von Bildern (1-5) und andererseits die Position jedes ausgewählten Bildes (A-Y) in der genannten Sequenz ermittelt,
o die Übereinstimmung herstellt (14), einerseits zwischen der Position der ausgewählten Gruppe von Bildern (1-5) und der Kennung der ausgewählten Gruppe von Bildern (1-5), und andererseits zwischen der Sequenz der Positionen der ausgewählten Bilder (A-Y) und der Sequenz der Kennungen der ausgewählten Bilder (A-Y),
∘ einerseits die Kennung der ausgewählten Gruppe von Bildern (1-5) mit der Kennung der Gruppe von Bildern (1-5) des für die Benutzerkennung registrierten Passworts (6) vergleicht (15-16) und andererseits die Sequenz der Kennungen der ausgewählten Bilder (A-Y) mit der Sequenz der Kennungen der Bilder (A-Y) des für die Benutzerkennung registrierten Passworts (6) vergleicht,
∘ wobei nur die Anwendung (12) in der Lage ist, diese Übereinstimmung herzustellen und/oder nur die Anwendung (12) in der Lage ist, diesen Vergleich durchzuführen,
∘ den Benutzer (17) authentifiziert (15), wenn der Vergleich positiv ist, aber die Authentifizierung des Benutzers (17) verweigert (16), wenn der Vergleich negativ ist.

2. Verfahren nach Anspruch 1, **dadurch gekennzeichnet, dass**:
➢ die genannte Reihenfolge der Gruppen von Bildern (1-5) in diesem Satz von Gruppen von Bildern (1-5) von der Anwendung (12) zufällig bei jeder neuen Authentifizierung des genannten Benutzers (17) in Form eines Karussells (19) von Bildrastern (1-5) angezeigt wird,
➢ und/oder die Reihenfolge der Bilder (A-Y) in dieser Gruppe von Bildern (1-5) von der Anwendung (12) zufällig bei jeder neuen Authentifizierung des Benutzers (17) in Form eines Bildrasters (1-5), das in Zeilen und Spalten aufgeteilt ist, angezeigt wird.

3. Verfahren nach irgendeinem der vorhergehenden Ansprüche, **dadurch gekennzeichnet, dass** die Anzahl der Gruppen von Bildern (1-5) in dem Satz der Gruppen von Bildern (1-5) wenigstens zweimal oder sogar wenigstens fünfmal kleiner ist als die Anzahl der Bilder (A-Y) in einer Gruppe von Bildern (1-5), unabhängig davon, ob alle Gruppen (1-5) die gleiche Anzahl von Bildern (A-Y) aufweisen oder nicht.

4. Verfahren nach irgendeinem der vorhergehenden Ansprüche, **dadurch gekennzeichnet, dass** die Bilder (A-Y) in den Gruppen von Bildern (1-5) nach Themen verteilt sind.

5. Verfahren nach irgendeinem der vorhergehenden Ansprüche, **dadurch gekennzeichnet, dass** der Benutzer (17) diese beiden Selektionen grafisch vornimmt:
➢ auf einer grafischen Schnittstelle (7), die die Nummer der ausgewählten Gruppe (1- 5) und/oder die Koordinaten jedes in der genannten Sequenz ausgewählten Bildes (A-Y) sendet,
➢ in einer Authentifizierungsfunktion (8), die die Übereinstimmung zwischen einerseits der genannten Nummer und der Kennung der ausgewählten Gruppe (1-5) und/oder andererseits der Sequenz der genannten Koordinaten und der Sequenz der Kennungen der ausgewählten Bilder (A-Y) herstellt, wobei nur die Authentifizierungsfunktion (8) in der Lage ist, diese Übereinstimmung herzustellen,
➢ in einer Datenbank (9):
∘ die die ausgewählte Kennung der Gruppe (1-5) und die Sequenz der Kennungen der ausgewählten Bilder (A-Y) jeweils mit der Kennung der Gruppe (1-5) des für die Benutzerkennung gespeicherten Passworts (6) und mit der Sequenz der Kennungen der Bilder (A-Y) des für die Benutzerkennung gespeicherten Passworts (6) vergleicht (15-16), wobei nur die Datenbank (9) in der Lage ist, diesen Vergleich durchzuführen,
o und die den Benutzer (17) authentifiziert (15), wenn der Vergleich positiv ist, aber die Authentifizierung des Benutzers (17) verweigert (16), wenn der Vergleich negativ ist.

6. Verfahren nach Anspruch 5, **dadurch gekennzeichnet, dass**:
> die grafische Schnittstelle (7), die Authentifizierungsfunktion (8) und die Datenbank (9), unter der Kontrolle von wenigstens zwei unabhängigen Akteuren stehen, vorteilhafterweise jeweils unter der Kontrolle von drei unabhängigen Akteuren stehen,
➢ bevorzugt, wenn die Anwendung (12) als Client-Server arbeitet, die grafische Benutzeroberfläche (7) auf dem Client lokalisiert ist, während die Authentifizierungsfunktion (8) und die Datenbank (9) auf dem Server lokalisiert sind.

7. Verfahren nach irgendeinem der vorhergehenden Ansprüche, **dadurch gekennzeichnet, dass**:
> der Satz von Gruppen von Bildern (1-5) eine Anzahl von Gruppen von Bildern (1-5) umfasst, die zwischen 3 und 10 liegt,
➢ und/oder die Gruppen von Bildern (1-5) jeweils eine Anzahl von Bildern (A-Y) umfassen, die zwischen 10 und 50 liegt.

8. Verfahren nach irgendeinem der Ansprüche 1 bis 7, **dadurch gekennzeichnet, dass** mehrere verschiedene Anwendungen (12) dieselben Bilder (A-Y) verwenden, jedoch mit einer unterschiedlichen Verteilung zwischen ihren Gruppen von Bildern (1-5) je nach Anwendung (12).

9. Verfahren nach irgendeinem der vorhergehenden Ansprüche, **dadurch gekennzeichnet, dass**:
➢ das grafische Passwort (6) von der Anwendung (12) in einer nicht reversiblen Form gespeichert wird,
o bevorzugt in einer zerstückelten Form,
▪ wobei diese zerstückelte Form vorteilhafterweise keine Kollisionen aufweist,
▪ wobei diese zerstückelte Form vorteilhafterweise eine Salt-funktion verwendet, die eine Information über den Benutzer (17) einführt.

10. Verfahren nach irgendeinem der Ansprüche 1 bis 9, **dadurch gekennzeichnet, dass**:
➢ entweder kein Bild (A-Y) zwei voneinander verschiedenen Gruppen von Bildern (1-5) gemeinsam ist,
➢ oder, wenn ein oder mehrere Bilder (A-Y) wenigstens zwei voneinander verschiedenen Gruppen von Bildern (1-5) gemeinsam sind, für wenigstens die Hälfte der Gruppen von Bildern (1-5) zwei beliebige Gruppen von Bildern (1-5) in dieser Hälfte der Gruppen von Bildern (1-5) immer weniger als die Hälfte ihrer Bilder (A-Y) gemeinsam haben.

## Claims

1. Method for authenticating a user (17) by user identifier and associated graphical password (6), **characterized in that**:
> the graphical password (6) comprises two parts:
o a first part obtained by a first selection of a group of images (1 - 5) from several groups of images (1-5),
o a second part obtained by a second selection of a sequence of several images (A-Y) in the selected group of images (1-5),
➢ the user (17) gives his or her user identifier to an application (12), and graphically performs:
o a first selection of a group of images (1-5) in a set of several groups of images (1-5), the order of the groups of images (1-5) in this set of groups of images (1-5) being randomly displayed by the application (12) with each new authentication of said user (17),
∘ a second selection of a sequence of several images (A-Y) in this group of images (1-5), the order of the images (A-Y) in this group of images (1-5) being randomly displayed by the application (12) with each new authentication of said user (17),
> the application (12):
o identifies the position of the selected group of images (1-5) in said set of groups of images (1-5) and identifies the position of each selected image (A-Y) in said sequence,
∘ establishes (14) the correspondence between the position of the selected group of images (1-5) and the identifier of the selected group of images (1-5), and between the sequence of the positions of the selected images (A-Y) and the sequence of the identifiers of the selected images (A-Y),
∘ compares (15-16) the identifier of the group of selected images (1-5) with the identifier of the group of images (1-5) of the password (6) registered for said user (17) identifier, and compares the sequence of the identifiers of the selected images (A-Y) with the sequence of the identifiers of the images (A-Y) of the password (6) registered for said user (17) identifier,
∘ the application (12) being the only entity able to establish this correspondence and/or the application (12) being the only entity able to make this comparison,
∘ authenticates (15) said user (17) if said comparison is positive but refuses (16) to authenticate said user (17) if said comparison is negative.

2. Authentication method according to claim 1, wherein:
> said order of the groups of images (1-5) in this set of groups of images (1-5) is randomly displayed by the application (12) with each new authentication of said user (17), in the form a carousel (19) of image grids (1-5),
> and/or said order of the images (A-Y) in this group of images (1-5) is randomly displayed by the application (12) with each new authentication of said user (17), in the form of a grid of images (1-5) distributed into rows and columns.

3. Authentication method according to any one of the preceding claims, wherein the number of groups of images (1-5) in the set of groups of images (1-5) is at least two or even at least five times smaller than the number of images (A-Y) in a group of images (1-5), regardless of whether all the groups (1-5) have the same number of images (A-Y).

4. Authentication method according to any one of the preceding claims, wherein the images (A-Y) are divided into the groups of images (1-5) by theme.

5. Authentication method according to any one of the preceding claims, wherein the user (17) makes these two selections graphically:
➢ in a graphical interface (7) that sends the number of the selected group (1-5) and/or the coordinates of each selected image (A-Y) in said sequence,
> to an authentication function (8) which establishes the correspondence between said number and the identifier of the selected group (1-5) and/or between the sequence of said coordinates and the sequence of the identifiers of the selected images (A-Y), the authentication function (8) being the only entity able to establish this correspondence,
> in a database (9):
o which compares (15-16) the identifier of the selected group (1-5) and the sequence of the identifiers of the selected images (A-Y) respectively with the identifier of the group (1-5) of the password (6) registered for said user (17) identifier and with the sequence of the identifiers of the images (A-Y) of the password (6) registered for said user (17) identifier, the database (9) being the only entity able to make this comparison,
∘ and which authenticates (15) said user (17) if said comparison is positive but refuses (16) to authenticate said user (17) if said comparison is negative.

6. Authentication method according to claim 5, wherein:
➢ said graphical interface (7), said authentication function (8), and said database (9) are under the control of at least two independent actors, advantageously are respectively under the control of three independent actors,
> preferably, when said application (12) runs in client-server mode, said graphical interface (7) is located on the client while said authentication function (8) and said database (9) are located on the server.

7. Authentication method according to any one of the preceding claims, wherein:
➢ said set of groups of images (1-5) comprises a number of groups of images (1-5) which is between 3 and 10,
➢ and/or said groups of images (1-5) each comprise a number of images (A-Y) which is comprised between 10 and 50.

8. Authentication method according to any one of claims 1 to 7, wherein several separate applications (12) use the same images (A-Y) but with a different distribution between groups of images (1-5) from one application (12) to another.

9. Authentication method according to any one of the preceding claims, wherein:
> the graphical password (6) is stored by the application (12) in a non-reversible form,
o preferably in a hashed form,
▪ this hashed form advantageously not having any collisions,
▪ this hashed form advantageously using a salting function introducing information relating to the user (17).

10. Authentication method according to any one of claims 1 to 9, wherein:
> either no image (A-Y) is common to two groups of images (1-5) that are distinct from each other,
➢ or, if one or more images (A-Y) are common to at least two groups of images (1-5) that are distinct from each other, then for at least half of the groups of images (1-5), any two groups of images (1-5) in this half of the groups of images (1-5) always have less than half of their images (A-Y) in common.
